# EUROPEAN PATENT APPLICATION

(11) **EP 4 299 365 A2**
(43) Date of publication of application: **03.01.2024**
(21) Application number: 23172304.0
(22) Date of filing: 09.05.2023
(51) Int. Cl.: B60L 53/65

(54) **CHARGING ELECTRIC VEHICLE BATTERIES WITH EXTERNAL CONVERTERS USING THE TIMESHARING PRINCIPLE**

(30) Priority: 09.05.2022 BE 202200029
(71) Applicant: FCL HOLDING NV, 3550 Heusden-Zolder (BE)
(72) Inventor: CLYMANS, Bart, 3582 KOERSEL (BE)
(74) Representative: Gevers Patents

(57) **Abstract**

The object of the invention is to charge the battery of multiple electric vehicles (cars, buses, trucks), which are simultaneously connected to multiple charging stations during parking, but are sequentially charged by 1 common DC charger. The number of electric vehicles charged by 1 DC charger in timesharing is of the order of magnitude 8 to 32. The aim is to spread the investment cost of the DC charger over multiple charging points so that it is price competitive with AC chargers as a parking charger, but retains the advantage of fast charging if required. Optionally, in V2G mode, the DC charger can use the combined battery capacity of all attached electric vehicles.

## Description

The current state of the art for charging the batteries of electric vehicles (cars, buses, trucks) uses 2 methods: on the one hand, charging the electric vehicle with the built-in AC-DC converter (hereinafter referred to as AC charger), on the other hand, charging by an external AC-DC converter (hereinafter referred to as DC charger).

Vehicle charging is done in 2 different situations: on the one hand, as transit charging, where fast charging (typically less than 1 hour) is the objective, and on the other hand, as parking charging, where the vehicle is available for charging for several hours (typically 8 hours) and minimum investment cost and/or minimum "Total Cost of Ownership" is the objective.

AC charging is not suitable for transit charging because the charging time here is determined by the power of the electric vehicle's internal AC/DC converter. Typical values are 6.6Kw, 11KW and exceptionally 22kW. A charge for a range of 200km requires 40 kWh of energy and thus a charge time of 3 to 6 hours. For parking charging, the AC charger qualifies provided no unforeseen fast charging is required.

DC charging is suitable for transit charging as the charging time can be drastically reduced due to the high powers of the AC/DC converters. Typical powers are 50kW to 100kW. A charge for a range of 200km requires 40kWh of energy and thus a 25-minute to 50-minute charge. For parking charging, the DC charger is not suitable because of its high investment cost.

An object of embodiments of the present invention is to provide a DC charger, a charging station, a timesharing multiplex switching module of the above known type but wherein the aforementioned shortcoming or drawbacks of the known solutions are alleviated or overcome.

This object is achieved by a DC Charger that comprises a logic controller that is configured to select a charging station from said plurality of charging stations by selecting a timesharing multiplex switching circuit of said charging station of said plurality of charging stations to connect said battery of said electric vehicle that is coupled to said charging station selected, for charging said battery of said electric vehicle coupled and furthermore configured to connect a communication controller of said electrical vehicle coupled to said charging station selected on a timesharing basis; and
- a converter configured to convert an AC power from a power network or DC power of stationary battery to a DC power of said battery of an electric vehicle of said plurality of electric vehicles coupled to said charging station selected; and
- a communications controller configured to control communication between said DC charger and said electric vehicle coupled to said charging station selected.

Indeed by a logic controller, selecting a charging station from said plurality of charging stations by selecting a timesharing multiplex switching circuit of said charging station selected of said plurality of charging stations, on a timesharing basis, to connect said battery of said electric vehicle coupled to said charging station selected, for charging said battery of said electric vehicle coupled and further connecting a communication controller of said electrical vehicle coupled to said charging station selected on a timesharing basis, a converter that is configured to convert an AC power from a power network or DC power of stationary battery to a DC power of said battery of said electric vehicle of said plurality of electric vehicles that is coupled to said charging station selected from the plurality of charging stations and a communications controller that is configured to control communication between said DC charger and said electric vehicle is coupled to said charging station selected.

The novelty of this patent is to convert the DC charger into a parking charger while retaining the advantage of fast charging (less than 1 hour) but with the low investment cost of an AC charger. The DC charger is connected via typically 8 to 32 charging stations with 8 to 32 electric vehicles. This number may be smaller or larger if necessary depending on the design parameters. These vehicles are in parking charging mode and are connected to a charging station at the start of parking and disconnected at the end of parking (typically 4 to 8 hours later). During this parking time, a single DC charger charges all electric vehicles according to the timesharing principle. At any time, only 1 electric vehicle has energy exchange with the DC charger, but all vehicles remain continuously connected to the DC charger. After each charging, the DC charger switches to the next vehicle: either sequentially according to the charging station number or according to a priority request from a vehicle. The DC charger contains only 1 AC/DC converter, typically 25 -100kW and only 1 communication controller to communicate with the 8 to 32 electric vehicles via a timesharing multiplex switching circuit. This allows the high investment cost of the DC charger to be shared across the number of charging points, making it price competitive with AC chargers, but maintaining the advantage of charging cars on demand quickly.

A further relevant embodiment of the present invention relates to a DC charger wherein said communication controller is further configured to authenticate said electrical vehicle coupled to said charging station selected based on a unique authentication number detected from said respective electrical vehicle.

Since many charging stations are (semi-)public, authentication of the car is required. With AC chargers, this is an RFID badge reader, which links the badge to the car for payment purposes. In timesharing with DC chargers, the vehicle's unique identification number is queried by the communication controller and used as authentication for payment and/or management purposes. This saves the RFID reader and badge and avoids error/fraud by using other badge.

A further relevant embodiment of the present invention relates to a DC charger wherein said DC charger further comprises a Power Line Communication modem configured to communicate with said electrical vehicle coupled to said selected charging station.

Another relevant embodiment of the present invention relates to a DC charger that is coupled to each said charging station of said plurality of charging stations over a shielded connection and selective earthing.

The communication between DC charger and electric vehicle is done by a PLC modem over the carrier wave generated by a pulse generator. This communication is highly susceptible to interference and limits the distance between vehicle and the communication controller of the DC charger. In the new patent, the longer distances required by timesharing with 8 to 32 vehicles are made possible by selective shielding and earthing of the multiplexed switching circuit.

Typical applications of this timesharing concept are company car parks, where electric vehicles stay for an average of 8 hours, or flat block car parks where vehicles are parked during the night or also during the day for longer periods.

Another relevant embodiment of the present invention relates to a DC charger wherein said converter is a bidirectional converter.

A further relevant embodiment of the present invention relates to a DC charger that is further is coupled to a stationary battery of a DC grid over a converter.As an option, the DC charger can be fitted with a bi-directional AC/DC converter. This allows the vehicle battery to release energy to the grid to reduce building consumption peaks. Solar energy can be stored in the vehicle battery and released back to the grid in case of grid imbalance. By combining these bi-directional AC/DC converters with timesharing, the battery content of 8 to 32 cars can be used as a buffer for grid imbalance regulation. This corresponds to a stationary battery of about 0.4 to 1.6 MWh, assuming an average of 50kWh of battery content per vehicle.

Still another relevant embodiment of the present invention relates to a DC charger that further comprises an interfacing means configured to interface with a smartphone or PC, HMI for controlling said logic controller, configured to select a charging station of said plurality of charging stations to control the timesharing of each battery of an electric vehicle of said plurality of electric vehicles coupled to said charging station.The order of vehicle charging is initially determined by the order of charging station numbers. Vehicles that need to be charged before a certain hour can request priority via a user interface on smartphone, PC, HMI or touchscreen. All such priority requests are then charged according to the requested charging hour. If desired, a higher charging rate can be linked to these priority requests.

Still another relevant embodiment of the present invention relates to a Timesharing multiplex switching module for selecting a charging station of said plurality of charging stations said at selection of said Timesharing multiplex switching module comprising a timesharing multiplex switching circuit configured to, at selection of said timesharing multiplex switching circuit by said logic controller of said DC charger, electrically connect said battery of an electric vehicle coupled to said charging station for charging said battery of said electric vehicle coupled to said charging station and further configured to connect a communication controller of said electrical vehicle coupled to said charging station selected on a timesharing basis.

A further relevant embodiment of the present invention relates to a charging station for charging a battery of an electric vehicle of a plurality of electric vehicles coupled to said charging station, wherein said charging station comprises a Timesharing multiplex switching module according to claim 8.

Another relevant embodiment of the present invention relates to a system for charging a battery of a plurality of electric vehicles, where said charging system comprises a DC charger coupled to a plurality of charging stations, each said charging station of said plurality of charging stations is configured to charge a battery of an electric vehicle coupled to a charging station, said system comprising a DC charger according to any of claims 1-7 and a plurality of charging stations according to claim 9.

### Design:

The number of charging points that can be linked is determined from the AC/DC converter power, the average number of kilometres travelled by the electric vehicles per charge and the average parking time.

Here is an example of a design calculation for charging points in a company car park. The average daily mileage is 50 km (corresponding to 20,000 km/year) per vehicle. The average daily energy consumption per vehicle is 10 kWh (= 20 kWh/100 km). The vehicles spend an average of 8 hours in the company car park. The DC charger chosen has 50 KW of power. It was chosen according to the building's available grid power. The charger can supply 400 kWh per 8 hours. Theoretically, the charger can charge 40 vehicles if the vehicles are charged daily. To accommodate consumption peaks after the weekend and/or to allow charging every 2 days (to limit the number of charging points), it is recommended to limit the number of charging points per DC charger to 16 (< 40 vehicles/2days).

For a 100 KW charger, the number of charging points becomes 32 provided the commercial vehicles have sufficient battery capacity and charging power. For a 25 kW charger, the number of charging points becomes 8.

Deviations from this design guideline can be made according to specific needs.

A key advantage of the timesharing principle is the constant maximum power drawn from the charging process. In the example above, this was 50 kW to charge 16 vehicles. If these 16 vehicles are charged by AC chargers simultaneously, the power peak in the range is 16 * 6.6kW or 105 kW and 16 * 11 kW or 176kW. This is a multiple of the timeshare power and is not available in most cases. The AC chargers must be assisted for this by a "load balancing unit", which should avoid charging all cars simultaneously.

With the option of bi-directional AC/DC converters, the power to and from the vehicle battery is controlled based on the building power grid power measurement (vehicle-to-building) or on a communicated external set point for the charging/discharging power (vehicle-to-grid) of the vehicle battery.

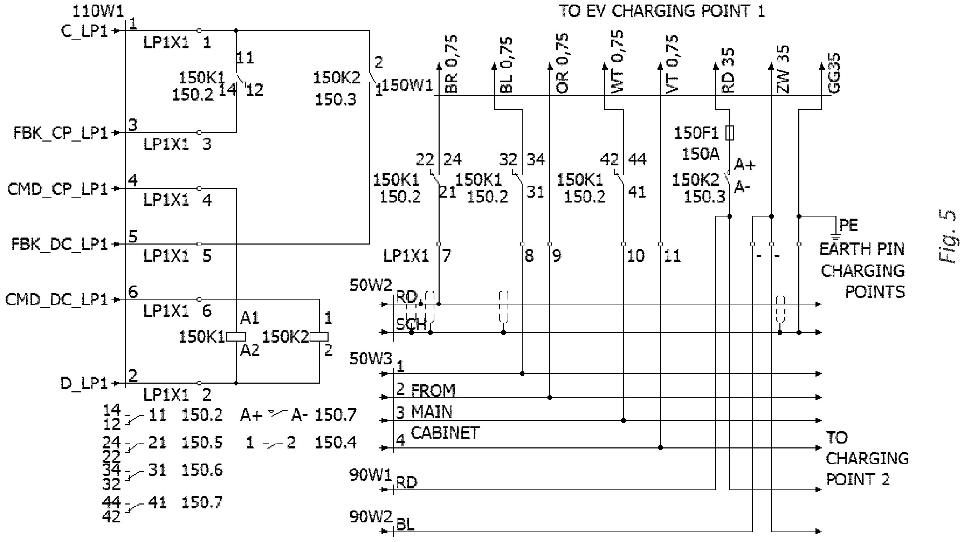

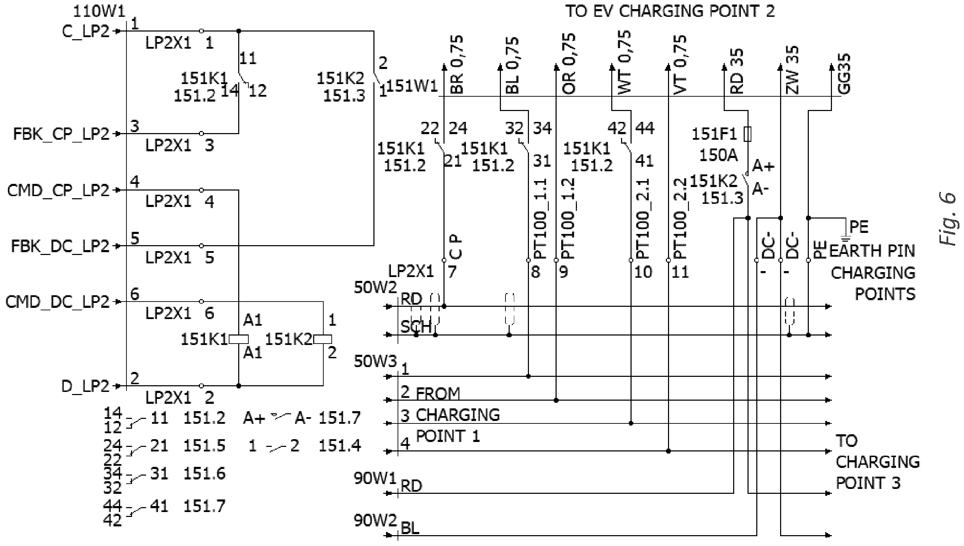

The design of a charging point consists of a charging cable with connector and a charging station or charging box with interface to the multiplexed switching circuit. The interface (Drawing 5 and 6) consists of switching devices (relays and/or static switches) for power transfer, for PLC communication, and feedback signals to avoid simultaneous coupling of 2 batteries and thus short circuits. Optionally, feedback signals monitoring the presence of a vehicle at a charge point can be used.

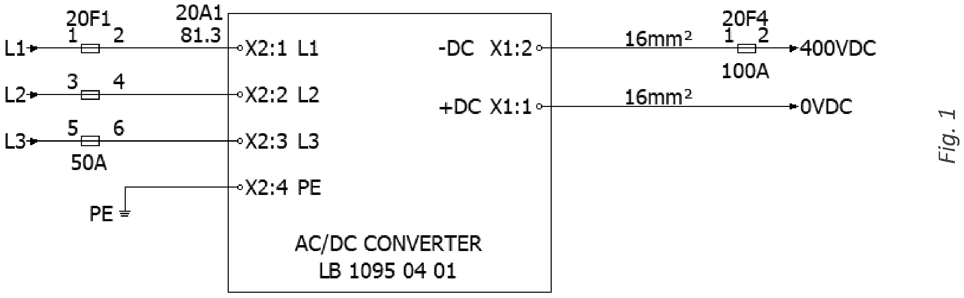

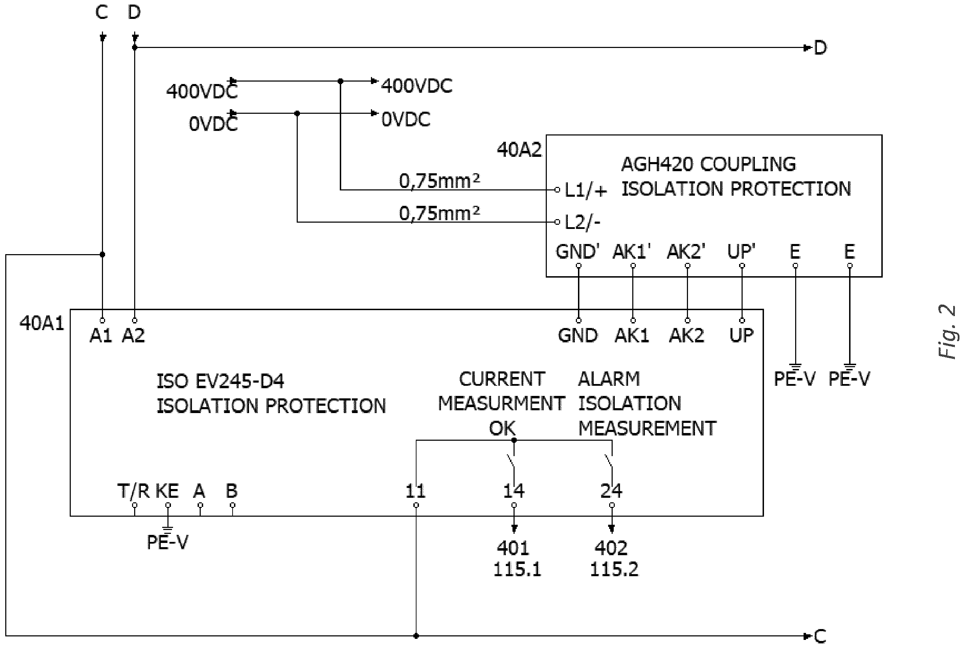

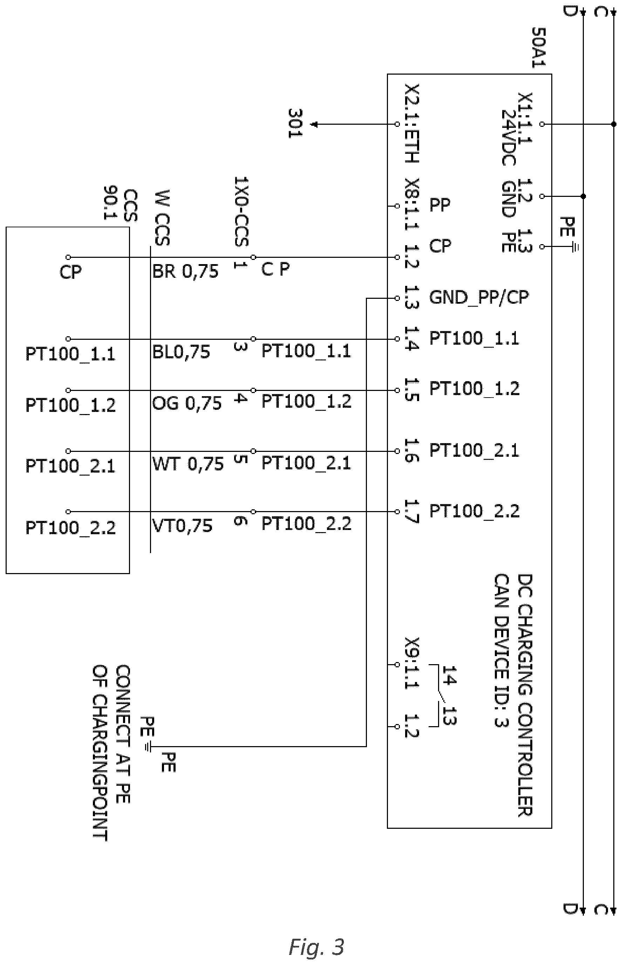

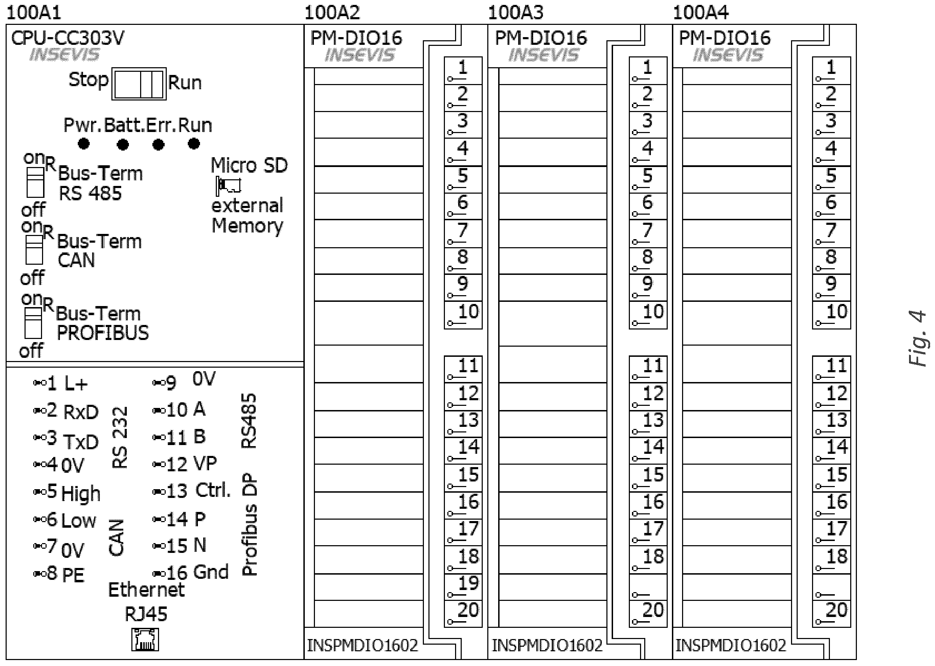

In this example, the DC charger consists of an AC/DC converter (Drawing 1 component 20A1), a communication controller (Drawing 3 component 50A1) common with a logic controller or separate from the logic controller (Drawing 4), protection circuit (fuses Drawing 1 components 20F1 and 20F2 and isolation monitoring Drawing 2 components 40A1 and 40A2), interface to multiplexed switching bus or circuit (Drawing 5).

The multiplex switching circuit contains conductors for power transmission, the PLC (power line communication) communication signal and multiplex switching signals, temperature measurement of the connector and the feedback signals from the charge posts. To make the PLC communication operationally reliable, the CP (Control Pilot) signal runs over a shielded cable. The positive CP signal is connected to the core and the negative CP signal to the shield. Selective earthing is required. The earthing of the AC/DC converters and logic controller is separated from the separate earthing of the communication signals from the trolleys and the communication modem. This allows reliable communication over distances of up to 50m between the charging stations and the DC charger. This makes it possible to connect up to 32 vehicles to 1 DC charger in timesharing.

### Overview of drawings:

### Drawing 1: AC/DC converter

In Drawing 1, we see an example of an AC/DC converter (20A1) with associated protection circuit (fuses 20F1 along AC side and fuse 20F4 along DC side).

### Drawing 2: Insulation monitoring

The 400Vdc and 0Vdc are also protected by an isolation monitoring device (40A1 and 40A2) that is also part of the protection circuit. Under the timesharing principle, these 400Vdc and 0Vdc are the wires for power transmission in the multiplex switching circuit.

### Drawing 3: Communication controller

In Drawing 3, we see a principle of a communication controller(50A1). This communication controller handles communication between the DC charger and the vehicles. The CP and GND_PP/CP are the PLC communication wires (of the carrier wave and the signal modulated on top of it), the four PT100 wires are the wires for temperature monitoring of the CCS plug. These signals will therefore be part of the multiplexed switching circuit in a timesharing principle.

### Drawing 4: Logic controller

On the page below from electrical drawing (Drawing 4), we see an example of a separate Logic controller. This logic controller may as well be integrated into the communication controller, depending on the design. It is the logic controller that provides the switching signals in the multiplexed switching circuit, and the feedback signals from the individual charging poles in the case of the timesharing principle.

### Drawing 5: Charging point in timeshare with multiplex switching circuit to interface DC charger

Drawing 5 shows the drawing of an individual charging point in the timesharing principle. On the left of the drawing, we see an example of interface to the multiplex switching circuit implemented with relays. The outputs of the logic controller provides the control signals of the relays and the inputs of the logic controller takes in the feedback signals.

Furthermore, at the bottom right we can see in summary all the signals of the multiplexed switching circuit. The wires of 50W2 are the PLC communication signals (in previous drawing CP and GND_CP/PP). The wires of 50W3 are the PT100 wires for temperature monitoring of each individual load point. Finally, 90W1 and 90W2 are the power transfer wires (in previous drawing 400Vdc and 0Vdc). These signals from the multiplex switching circuit in combination with the interface are then brought in at each individual charge point and connected up to a CCS plug.

### Drawing 6: Charging point in timeshare with multiplex switching circuit to interface of previous charging point

For completeness, the drawing (Drawing 6) of individual charge point where the signals of the multiplex switching circuit come from a previous charge point and go to a next charge point is also shown below (in the above drawing, the signals came from the DC charging cabinet).

According to a first embodiment of the present invention, DC chargers are suitable as transit chargers because of their high charging capacities and short charging time, but are not suitable as parking chargers because of their high investment cost and/or the need to swap the different vehicles parked and to be charged for a short-term charge. AC chargers are suitable for parking chargers because of their low investment cost, but cannot quickly charge the vehicles if required due to circumstances.

The distinguishing feature of this patent application is the use of DC chargers with timesharing principle. This allows a large number of electric vehicles (cars, buses, trucks) to be connected to charging stations simultaneously during their normal parking period. The investment cost is significantly reduced and is price competitive with AC chargers. If required, a vehicle can be prioritised and quickly charged for a requested charging time.

The Timesharing DC charger consists of 1 common converter (either an AC/DC converter when mains powered or a DC/DC converter when powered from a stationary battery or other vehicle battery), 1 common communication controller, common protection components, 1 common logic controller (integrated or not with the communication controller) for all charging points. Each charging point contains the charging cable with connector for the vehicle and a charging station or charging cabinet with an interface circuit to the multiplexed switching bus. The interface circuit contains the switching devices for power transfer, for PLC communication (power line communication) and connector feedback signals and temperature measurement. The multiplex switching circuit contains conductors for the power transfer, the PLC signal and multiplex switching signals and the feedback signals and connector temperature measurement and connects the DC charger to all charging station interfaces.

Vehicle authentication can be done by communicating the vehicle's unique identification number to avoid costs and error/fraud with an RFID reader and badges.

The AC/DC or the DC/DC converters can optionally be bi-directional to send energy from the batteries of the parked cars back to the grid to either balance the grid or minimise the building's electricity peak and/or consumption.

The software can feature a user interface on a smartphone, PC, HMI or touchscreen on which the user of the vehicle can request priority charging by entering a desired charging time. The timesharing logic will determine the order of charging according to the desired charging times or according to other priority algorithms to be chosen.

A DC charger as described in a first embodiment of the present invention with a common AC/DC or DC/DC converter, a common communication controller (or communication modem) for sequential charging of multiple electric vehicles (cars, buses, trucks) (timesharing principle) via multiple charging poles and/or charging cabinets, each connected to a vehicle during a parking time longer than a charging time.

A DC charger as described in a first embodiment of the present invention with timesharing principle that authenticates the vehicle for management and/or payment purposes by the requested unique authentication identification number of the vehicle.

A DC charger as described in a first embodiment of the present invention with timesharing that uses a bi-directional AC/DC to send energy from the batteries of all vehicles coupled with the timesharing charger back to the grid for grid balancing and/or minimise electric grid power or grid consumption.

A DC charger as described in a first embodiment of the present invention with timesharing that uses an AC/DC converter between the electrical grid and a stationary battery and a DC/DC converter between stationary battery and vehicle battery to reduce the electrical power required to allow connection to the low-voltage grid if necessary.

A DC charger as described in a first embodiment of the present invention with timesharing that uses a bi-directional AC/DC converter between the electrical grid and a stationary battery and a bi-directional DC/DC converter between stationary battery and vehicle battery to, on the one hand, reduce the electrical power required to enable connection to the low-voltage grid if necessary and, on the other hand, send the energy from the batteries of all vehicles coupled with the timesharing charger back to the grid for grid balancing and/or minimise electrical grid power or grid consumption

A DC charger as described in a first embodiment of the present invention with timesharing that uses shielded cables and selective earthing to make communication with the vehicles operationally safe.

A DC charger as described in a first embodiment of the present invention with timesharing to avoid the power peak required to charge multiple vehicles simultaneously as with conventional AC and DC chargers and/or to avoid additional equipment to apply conventional "load balancing" With timesharing, the power peak is determined by the charging capacity of 1 vehicle.

A DC charger as described in a first embodiment of the present invention with timesharing in which the charging order can be changed by priority rules that the user may choose and enter via a user interface on a smartphone, PC, HMI or touchscreen. Priority rules may typically depend on the desired charging time and/or vehicle or vehicle user data and/or charging station number.

## Claims

1. DC charger for charging a battery of an electric vehicle of a plurality of electric vehicles, said DC charger being electrically coupled to a plurality of charging stations over a timesharing multiplex switching circuit of each charging station of said plurality of charging stations, each charging station of said plurality of charging stations is configured to charge a battery of an electric vehicle of said plurality of electric vehicles coupled to said charging station, **CHARACTERIZED IN THAT** said DC Charger comprises:
- a logic controller, configured to select a charging station of said plurality of charging stations by selecting a timesharing multiplex switching circuit of said charging station of said plurality of charging stations to connect said battery of said electric vehicle coupled to said charging station selected, for charging said battery of said electric vehicle coupled and further configured to connect a communication controller of said electrical vehicle coupled to said charging station selected on a timesharing basis; and
- a converter configured to convert an AC power from a power network or DC power of stationary battery to a DC power of said battery of an electric vehicle of said plurality of electric vehicles coupled to said charging station selected; and
- a communications controller configured to control communication between said DC charger and said electric vehicle coupled to said charging station selected.

2. DC charger according to claim 1, **CHARACTERIZED IN THAT** said communication controller is further configured to authenticate said electrical vehicle coupled to said charging station selected based on a unique authentication number detected from said respective electrical vehicle.

3. DC charger according to claim 1, **CHARACTERIZED IN THAT** said DC charger further comprises a Power Line Communication modem configured to communicate with said electrical vehicle coupled to said selected charging station.

4. DC charger according to claim 1 to 3, **CHARACTERIZED IN THAT** said converter is a bidirectional converter.

5. DC charger according to claim 4, **CHARACTERIZED IN THAT** said DC charger is further is coupled to a stationary battery of a DC grid over a converter.

6. DC charger according to claim 1 to 5, **CHARACTERIZED IN THAT** said DC charger further comprises an interfacing means configured to interface with a smartphone or PC, HMI for controlling said logic controller, configured to select a charging station of said plurality of charging stations to control the timesharing of each battery of an electric vehicle of said plurality of electric vehicles coupled to said charging station.

7. DC charger according to claim 1-6, **CHARACTERIZED IN THAT** said DC charger is coupled to each said charging station of said plurality of charging stations over a shielded connection and selective earthing.

8. Timesharing multiplex switching module for selecting a charging station of said plurality of charging stations said at selection of said Timesharing multiplex switching module comprising a
a timesharing multiplex switching circuit configured to, at selection of said timesharing multiplex switching circuit by said logic controller of said DC charger, electrically connect said battery of an electric vehicle coupled to said charging station for charging said battery of said electric vehicle coupled to said charging station and further configured to connect a communication controller of said electrical vehicle coupled to said charging station selected on a timesharing basis.

9. Charging station for charging a battery of an electric vehicle of a plurality of electric vehicles coupled to said charging station, **CHARACTERIZED IN THAT** said charging station comprises:
- a Timesharing multiplex switching module according to claim 8.

10. System for charging a battery of a plurality of electric vehicles, where said charging system comprises a DC charger coupled to a plurality of charging stations, each said charging station of said plurality of charging stations is configured to charge a battery of an electric vehicle coupled to a charging station, said system comprising a DC charger according to any of claims 1-7 and
- a plurality of charging stations according to claim 9.
